**Europäisches Patentamt**

**European Patent Office**

**Office européen des brevets**

(11) Numéro de publication: **0 035 448 B1**

# FASCICULE DE BREVET EUROPEEN

(45) Date de publication du fascicule du brevet: **12.06.85**

(51) Int. Cl.⁴: **H 04 L 9/02**

(21) Numéro de dépôt: **81400302.6**

(22) Date de dépôt: **27.02.81**

---

(54) Procédé et système de transmission d'informations confidentielles.

---

(30) Priorité: **03.03.80 FR 8004701**

(43) Date de publication de la demande:
**09.09.81 Bulletin 81/36**

(45) Mention de la délivrance du brevet:
**12.06.85 Bulletin 85/24**

(84) Etats contractants désignés:
**CH DE FR GB IT LI NL SE**

(56) Documents cités:
**CH - A - 577 216**
**FR - A - 2 401 459**
**US - A - 3 291 908**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Herve, Robert Jean Louis Anthime, 94, avenue Gambetta, F-75020 Paris (FR)**

(74) Mandataire: **Doireau, Marc, CII-Honeywell Bull 94, avenue Gambetta Boîte Postale 33, F-75960 Paris cedex 20 (FR)**

ACTORUM AG

## Description

La présente invention concerne un procédé et un système de transmission d'informations confidentielles.

Elle concerne plus particulièrement les systèmes dans lesquels les informations sont transmises sous la forme de messages représentés dans un code binaire. Mais aussi les autres formes de transmission. Ces messages sont chiffrés par l'intermédiaire d'une clé de chiffrement au moment de leur émission, puis déchiffrés pour être restitués sous leur forme d'origine en clair à la réception. Ces systèmes présentent au moins deux inconvénients. Le premier réside dans le fait que la fonction mathématique permettant le déchiffrement du message chiffré doit être rigoureusement l'inverse de celle qui a permis de le chiffrer. La sécurité de ces systèmes réside principalement dans le fait que les fonctions utilisées sont complexes.

Le deuxième inconvénient réside dans le fait que la crédibilité de ces systèmes n'est assurée que si les clés peuvent être aisément modifiées dans le temps ce qui suppose la mise en place de messageries confidentielles acheminant les clés vers les partenaires.

Il est connu du document de brevet US-A 3 291 908 un système pour la transmission d'informations confidentielles entre un appareil émetteur et un appareil récepteur reliés entre eux par une voie de transmission; l'appareil émetteur comprenant:

– un générateur de nombres aléatoires
– une mémoire où sont au moins enregistrés un programme et un code secret
– des circuits de traitement pour calculer une clé de chiffrement par exécution du programme qui prend au moins en compte un nombre aléatoire et le code secret
– et un dispositif de chiffrement pour chiffrer avec la clé un message à transmettre;
l'appareil récepteur comprenant:
– une mémoire où sont au moins enregistrés le même programme et le code secret
– et des circuits de traitement pour calculer un clé de déchiffrement par éxécution du programme qui prend au moins en compte le nombre aléatoire transmis à l'appareil récepteur et le code secret.

Un tel système ne procure pas une sécurité suffisante pour permettre la transmission de messages qu'entre des personnes dûment habilitées, car il ne tient pas compte de la personne émettrice et de la personne réceptrice d'un message.

L'invention propose un tel système caractérisé en ce que la mémoire et les circuits de traitement, la mémoire et les circuits de traitement sont respectivement contenus dans deux supports électroniques portatifs, le contenu des mémoires n'étant pas lisible de l'extérieur.

Le système ne peut alors fonctionner que si les deux opérateurs ont des objets portatifs rigoureusement accordés ce qui revient à dire par exemple que l'organe de traitement doit être sollicité par le même programme et la mémoire doit contenir le même code secret. Il va de soi qu'un fraudeur, ne disposant ni du programme ni du code secret, ne peut calculer la clé propre lui permettant de déchiffrer le message transmis. La tâche lui est rendue d'autant plus difficile que le système modifie à tout moment la clé banale de façon aléatoire.

Le brevet FR-A 2 401 459 décrit on objet portatif comportant une mémoire et des circuits de traitement. La mémoire possède une zone qui est inaccessible de l'extérieur.

Selon l'invention, on utilise cette zone pour enregistrer le code secret.

L'homme de l'art utiliserait plûtot un support portatif incluant un dispositif de chiffrement (mélangeur).

Selon une autre caractéristique de l'invention et pour accroître de façon quasi absolue la sécurité du système, chaque objet portatif du système peut contenir à l'intérieur de sa mémoire en plus une table des codes d'identification liés aux messages que chaque personne aura le droit de transmettre et de recevoir.

Le code d'identification lié au message contenu dans les mémoires des objets portatifs sera pointé par des générateurs d'adresses situés à la fois au niveau de l'émetteur et du récepteur. Ces générateurs d'adresses établissent la correspondance entre le code d'identification $I_n$ lié message et l'adresse du code d'identification contenu dans la mémoire de l'objet portatif. La transmission du message ne pourra alors s'effectuer correctement que si le générateur d'adresse et les objets portatifs ont pu établir l'identité du code d'identification lié au message.

L'invention sera mieux comprise à l'aide de la description faite au regard des dessins qui va suivre.

La figure 1 représente l'organisation du système de traitement de l'information selon l'invention.

La figure 2 est une représentation d'un des générateurs d'adresse de la figure 1.

La figure 3 est une représentation d'un des séquenceurs de la figure 1.

La figure 4 représente le circuit combinatoire utilisé dans les opérations de chiffrement et de déchiffrement.

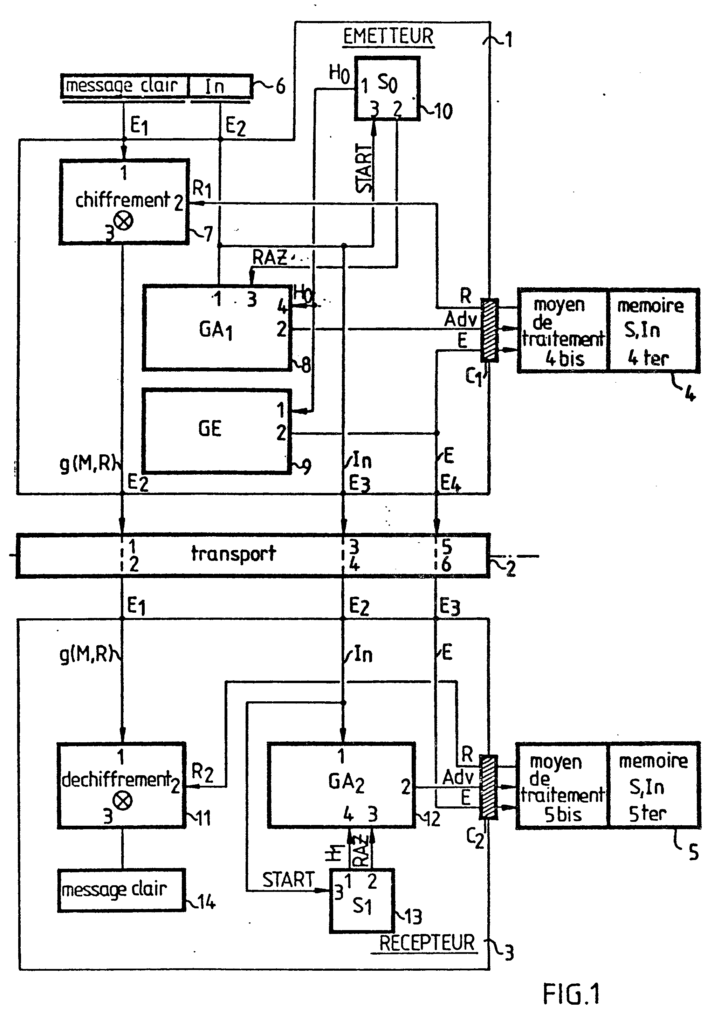

La système représenté à la figure 1 se compose d'un émetteur (1) et d'un récepteur (3) reliés ensemble par un système de voie de transmission (3). L'émetteur (1) et le récepteur (3) peuvent être accouplés temporairement à des objets portatifs (4) et (5) comportant respectivement des moyens de traitement (4bis) et (5bis) ainsi que des dispositifs de mémorisation (4ter) et (5ter). De tels objets portatifs sont décrits dans le brevet français n° 2 401 459 de la demanderesse.

Les dispositifs de mémorisation des objets portatifs sont partagés en au moins trois zones. La première est une zone secrète renfermant un code secret S qui est écrit au moment de l'initialisation de l'objet portatif. Le code secret ne peut dès lors être lu que par l'organe de traitement de l'objet portatif lui-même et ne peut en aucun cas être lu par l'extérieur. La deuxième zone est une zone renfermant les codes d'identification $I_n$ liés aux messages que le porteur de l'objet est habilité à transmettre. La troisième zone renferme un programme P dont la fonction est de calculer une clé propre R à partir des paramètres S, $I_n$ et de la clé banale E. Ce qui se résume par la formule R = P (S, $I_n$, E). Le programme P une fois écrit n'est pas modifiable et pourra être avantageusement contenu dans une mémoire morte du type ROM (abréviation du terme anglo-saxon Read Only Memory). L'écriture des codes d'identification en deuxième zone de mémoire pourra pour des raisons de sécurité être protégée par une clé standard inconnue du porteur de l'objet portatif.

Le système de voie de transmission peut être pris quelconque parmi les systèmes de voie de transmission par câble électrique, optique, acoustique, magnétique ou liaison hertzienne.

L'émetteur (1) est constitué par un dispositif (7) de chiffrement, un générateur d'adresse $GA_1$ 8, un générateur de codes aléatoires GE 9 et un séquenceur $S_0$ 10.

Le récepteur (2) est constitué par un dispositif (11) de déchiffrement, un générateur d'adresse $GA_2$ 12 et un séquenceur $S_1$ 13.

Les objets portatifs (4) et (5) peuvent être temporairement accouplés à l'émetteur (1) et au récepteur (3) par les moyens d'accouplement respectifs ($C_1$) et ($C_2$).

Le dispositif de chiffrement (7) reçoit sur son entrée 1 le message au clair à chiffrer et sur son entrée 2 la clé propre de chiffrement ($R_1$). Le message g(M,R) chiffré par le dispositif (7) est transmis par ce dernier sur sa sortie 3 vers l'entrée 1 du dispositif de déchiffrement (11) par l'intermédiaire du système de voie de transmission (2). Le message g(M,R) est alors déchiffré par le dispositif (11) par réception sur son entrée 2 de la clé propre ($R_2$), le message apparaît en clair sur sa sortie 3 et est figuré en 14.

La clé propre de chiffrement ($R_1$) est délivrée et calculée par l'organe de traitement (4bis) de l'objet portatif (4). De même, la clé propre de déchiffrement ($R_2$) est délivrée et calculée par l'organe de traitement (5bis) de l'objet portatif. Le générateur d'adresse $GA_1$ 8 calcule l'adresse du code d'identification du message située dans la mémoire (4ter) de l'objet portatif (4) à partir du code d'identification ($I_n$) lié au message en clair (6) et le transmet par sa sortie 2 sur le bus de données et d'adresse de l'objet portatif (4) (voir le brevet français n° 2 401 459) au travers du moyen d'accouplement ($C_1$). Le générateur d'adresse est remis dans un état initial par le signal RAZ transmis sur son entrée 3 par la sortie 2 du séquenceur $S_0$ 10, il est activé par les signaux d'horloge $H_0$ transmis sur son entrée 4 par la sortie 1 du séquenceur $SO_{10}$. Le séquenceur $S_0$ et commandé par le signal START dès qu'un message est transmis à l'entrée $E_2$ de l'émetteur (1). Le générateur de code aléatoire GE 9 délivre un signal aléatoire E sur plusieurs bits par action des signaux d'horloge $H_0$ émis par le séquenceur $SO_{10}$. Il peut être constitué par un simple compteur en anneaux. Ce code aléatoire est transmis par la sortie 2 du générateur (9) aux entrées respectives des objets portatifs (4) et (5) par l'intermédiaire de leurs dispositifs d'accouplement. De la même manière que pour le générateur $GA_1$ 8 le générateur $GA_2$ 12 reçoit sur son entrée 1 le code d'identification ($I_n$) (qui lui est transmis par l'intermédiaire du système de voie de transmission) pour calculer et délivrer sur sa sortie 2 l'adresse du code d'identification correspondant dans la mémoire (5ter) de l'objet portatif (5). Ce générateur d'adresse est remis dans un état initial par le signal RAZ appliqué sur son entrée 3 par le séquenceur S1 13 et est activé par le signal d'horloge $H_1$ appliqué sur son entrée 4 par le séquenceur $S_1$. Le séquenceur $S_1$ est commandé sur son entrée 3 dès qu'un message est transmis par la voie de transmission (2).

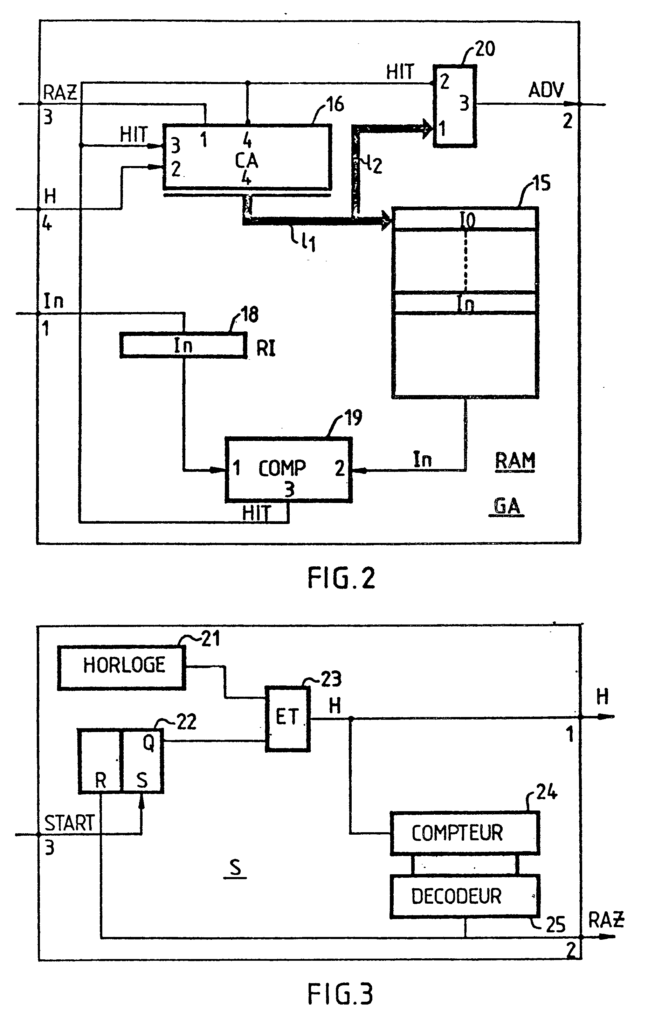

La réalisation d'un générateur d'adresse est représenté à la figure 2. Il comprend une mémoire (15) de type RAM (abréviation du terme anglo-saxon Random Access Memory) ou de type PROM ou EPROM (abréviation des termes anglo-saxons Programmable Read Only Memory et Erasable Read Only Memory). Cette mémoire contient une table de tous les codes d'identification ($I_n$) des messages que le système est autorisé à transmettre. Cette mémoire est adressée à l'aide d'un compteur d'adresse CA 16. Ce compteur progresse à l'aide du signal d'horloge H présent sur l'entrée 4 du générateur d'adresse, il est remis à zéro par le signal RAZ présent sur l'entrée 3 du générateur d'adresse. Ce compteur détermine l'adresse du code d'identification $I_n$ contenu dans la mémoire de l'objet portatif et correspondant au message à transmettre. Cette détermination s'effectue à l'aide du registre d'identification RI 18 et du comparateur (19). Le code d'identification qui accompagne le message (6) à transmettre est introduit dans le registre RI 18, puis le compteur CA 16 progresse au rythme de l'horloge H, pour adresser et lire des mots d'identification contenus dans la mémoire (15). Les codes d'identification ($I_n$) sont ainsi présentées successivement sur une entrée du comparateur (19) qui les compare au code d'identification contenu dans le registre (18).

Lorsqu'il y a identité dans la comparaison, le compteur d'adresse CA arrête sa progression par application du signal HIT sur son entrée 4 et délivré par la sortie 3 du comparateur (14). Simultanément, le contenu du compteur CA 16 qui représente l'adresse où se trouve dans l'objet portatif le code d'identification ($I_n$) du message à transmettre, est transmis par l'intermédiaire de la porte (20) commandée sur son entrée 1 par le signal HIT, sur la sortie du générateur d'adresse. Un exemple de réalisation d'un séquenceur S est montré à la figure 3. Il comprend une horloge (21), un basculeur (22), une porte ET (23), un compteur (24) et un décodeur (25). Une entrée de la porte (23) reçoit les signaux d'horloge en provenance de l'horloge (21) ces signaux sont retransmis à sa sortie en direction de la sortie 1 du séquenceur lorsque l'autre entrée de la porte (23) est commandée par la sortie Q du basculeur (22). La sortie Q du basculeur (22) prend un état logique 1 lorsqu'il est commandé sur son entrée S par le signal START appliqué sur l'entrée 3 du séquenceur. Ce signal START peut être constitué par l'état présent d'un bit particulier accompagnant le message (6) à transmettre. Le signal H est transmis à l'entrée du compteur en anneau (24) dont un état particulier est décodé par le décodeur (25) de façon à remettre dans l'état zéro le basculeur (22) et délivrer le signal de RAZ sur la sortie 2 du séquenceur.

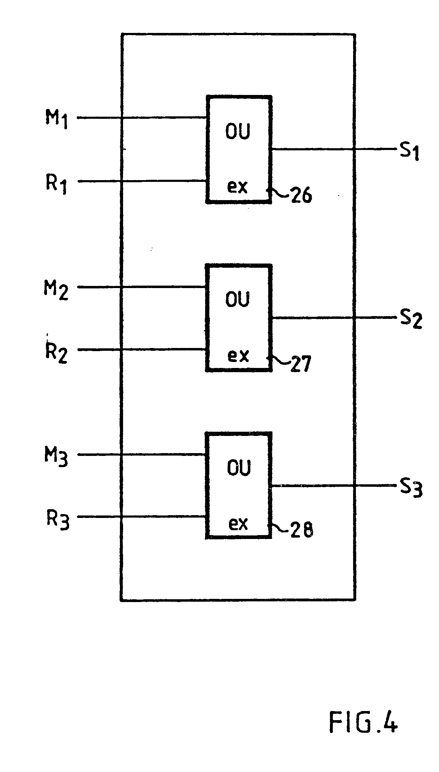

La figure 4 représente le circuit combinatoire utilisé à la fois pour réaliser les dispositifs de chiffrement et de déchiffrement (7) et (11) de la figure 1. Ce circuit est réalisé à base de circuits du type OU exclusif. A l'émission, un bit $M_i$ du message à transmettre et un bit $R_i$ de la clé propre sont appliqués respectivement sur une entrée d'un circuit ou exclusif de façon que la combinaison résultante vérifie l'équation logique $S_i = M_i$ ou excl $R_i + M_i$. A la réception, le déchiffrement a lieu en utilisant également un circuit OU exclusif en appliquant sur deux de ses entrées les signaux $S_i$ et $R_i$ de façon à restituer les bits $M_i$. L'exemple de la figure 4 montre une réalisation d'un circuit de chiffrement pour un message et un mot clé de trois bits. Les circuits (26) à (34) délivrent les signaux $S_1$ à $S_3$ de sorte que:

$$S_1 = M_1 \text{ ou excl } R_1$$
$$S_2 = M_2 \text{ ou excl } R_2$$
$$S_3 = M_3 \text{ ou excl } R_3$$

Le fonctionnement du système de transmission d'informations chiffrées selon l'invention est le suivant. L'apparition du message en clair sur les entrées $E_1$ et $E_2$ de l'émetteur (1) provoque de déclenchement du générateur d'adresse de l'émetteur et du récepteur $GA_1$ et $GA_2$ ainsi que du générateur de code aléatoire ou de clé banale GE. L'identité du message est reconnue par les générateurs d'adresses $GA_1$ et $GA_2$ qui transmettent alors l'adresse du code d'identité $(I_n)$ correspondant dans les objets portatifs (4) et (5). Les clés propres $R_1$ et $R_2$ sont alors calculées par les organes de traitement de chacun des objets portatifs à l'aide des équations $R_x = P (E, S, I_n)$. Si les objets portatifs sont de même nature c'est-à-dire s'ils contiennent chacun le même programme P le même code S et le même code d'identification $(I_n)$, les clés banales $R_1$ et $R_2$ se trouvent être les mêmes, la clé banale $R_1$ est appliquée au dispositif de chiffrement (7) alors que la clé $R_2$ est appliquée au dispositif de déchiffrement (11), le message reçu en (14) est alors identique au message en clair transmis (6).

L'exemple qui vient d'être donné d'une réalisation préférée de l'invention n'est nullement limitatif, il va de soi que tout homme de l'art bien au fait des techniques de transmission de données pourra concevoir d'autres modes de réalisation de l'invention sans pour autant sortir de son cadre.

## Revendications

1. Système pour la transmission d'informations confidentielles entre un appareil émetteur (1) et un appareil récepteur (3) reliés entre eux par une voie de transmission (2); l'appareil émetteur comprenant:

– un générateur (9) de nombres aléatoires (E),
– une mémoire (4 ter) où sont au moins enregistrés un programme (P) et un code secret (S),
– des circuits de traitement (4 bis) pour calculer une clé de chiffrement (R1) par exécution du programme (P) qui prend au moins en compte un nombre aléatoire (E) et le code secret (S),
– et un dispositif de chiffrement pour chiffrer avec la clé (R1) un message (M) à transmettre;
l'appareil récepteur comprenant:
– une mémoire (5 ter) où sont au moins enregistrés le même programme (P) et le code secret (S),
– et des circuits de traitement (5 bis) pour calculer une clé de déchiffrement (R2) par éxécution du programme (P) qui prend au moins en compte le nombre aléatoire (E) transmis à l'appareil récepteur et le code secret (S), caractérisé en ce que la mémoire (4 ter) et les circuits de traitement (4 bis), la mémoire (5 ter) et les circuits de traitement (5 bis) sont respectivement contenus dans deux supports électroniques portatifs (4–5), le contenu des memoires (4 ter, 5 ter) n'étant pas lisible de l'extérieur.

2. Système selon la revendication 1, caractérisé en ce que le programme (P) prend en compte un code d'identification (In) préenregistré dans chaque mémoire (4 ter, 5 ter).

3. Système selon la revendication 2, caractérisé en ce que la mémoire (4 ter, 5 ter) de chaque support (4, 5) contient plusieurs codes d'identification (In) respectivement associés à plusieurs types de messages susceptibles d'être transmis, ladite mémoire (15) contenant l'ensemble des codes d'identification (In) autorisés qui sont successivement comparés dans un comparateur (19) avec le code d'identification lié au message à transmettre.

## Claims

1. System for the transmission of confidential information between a transmitter apparatus (1) and a receiver apparatus (3) interconnected by a transmission channel (2); the transmitter apparatus comprising:

– a generator (9) of random numbers (E),
– a memory (4 ter) in which are recorded at least one program (P) and a secret code (S),
– processing circuits (4 bis) for calculating a coding key (R1) by execution of the program (P) which makes allowance for at least one random number (E) and the secret code (S),
– and a coding device for coding with the key (R1) a message (M) which is to be transmitted, the receiver apparatus comprising:

– a memory (5 ter) in which are recorded at least the same program (P) and the secret code (S),

– and processing circuits (5 bis) for calculating a decoding key (R2) by execution of the program (P) which makes allowance for at least the random number (E) transmitted to the receiver apparatus, and the secret code (S),

characterised in that the memory (4 ter) and the processing circuits (4 bis), the memory (5 ter) and the processing circuits (5 bis) are contained, respectively, in two portable electronic carriers (4–5), the contents of the memories (4 ter, 5 ter) not being readable from the outside.

2. System according to claim 1, characterised in that the program (P) makes allowance for an identification code (In) prerecorded in each memory (4 ter, 5 ter).

3. System according to claim 2, characterised in that the memory (4 ter, 5 ter) of each carrier (4, 5) contains several identification codes (In) associated, respectively, with several kinds of messages able to be transmitted, the said memory (15) containing the whole of the authorised identification codes (In) which are compared successively with the identification code coupled to the message which is to be transmitted, in a comparator (19).

**Patentansprüche**

1. System für die Übertragung von vertraulichen Informationen zwischen einem sendenden Gerät (1) und einem empfangenden Gerät (3), die miteinander über einen Übertragungskanal (2) verbunden sind; wobei das sendende Gerät umfasst:

– einen Generator (9) zur Erzeugung von Zufallszahlen (E),
– einen Speicher (4 ter), worin wenigstens ein Programm (P) und ein geheimer Code (S) gespeichert sind,

– Verarbeitungsschaltungen (4 bis) zur Berechnung eines Codeschlüssels (R1) durch Ausführung des Programms (P), das wenigstens eine Zufallszahl (E) und den geheimen Code (S) berücksichtigt,

– und eine Verschlüsselungsvorrichtung zum Verschlüsseln einer zu übertragenden Nachricht (M) mittels des Codeschlüssels (R1);

und das empfangende Gerät umfasst:
– einen Speicher (5 ter), worin wenigstens dasselbe Programm (P) und der geheime Code (S) gespeichert sind,

– und Verarbeitungsschaltungen (5 bis) zum Berechnen eines Codeschlüssels (R2) durch Ausführung des Programmes (P), welches wenigstens die zu dem empfangenden Gerät übertragene Zufallszahl (E) und den geheimen Code (S) berücksichtigt,

dadurch gekennzeichnet, dass der Speicher (4 ter) und die Verarbeitungsschaltungen (4 bis) der Speicher (5 ter) und die Verarbeitungsschaltungen (5 bis) jeweils in einem von zwei tragbaren elektronischen Trägern (4–5) enthalten sind, wobei der Inhalt der Speicher (4 ter, 5 ter) von aussen her nicht lesbar ist.

2. System nach Anspruch 1, dadurch gekennzeichnet, dass das Programm (P) einen Identifikationscode (In) berücksichtigt, der in jeden Speicher (4 ter, 5 ter) zuvor eingespeichert ist.

3. System nach Anspruch 2, dadurch gekennzeichnet, dass der Speicher (4 ter, 5 ter) jedes Trägers (4, 5) mehrere Identifikationscodes (In) enthält, die jeweils einem von mehreren Nachrichtentypen zugeordnet sind, die übertragen werden können, wobei der genannte Speicher (15) die Gesamtheit der zugelassenen Identifikationscodes (In) enthält, die nacheinander in einem Komparator (19) mit dem Identifikationscode verglichen werden, der mit der zu übertragenden Nachricht verbunden ist.

FIG.1

FIG.2

FIG.3

FIG.4